# FASCICULE DE BREVET EUROPEEN

(11) **EP 0 848 800 B1**
(45) Date de publication et mention de la délivrance du brevet: **13.12.2000**
(21) Numéro de dépôt: 95930564.0
(22) Date de dépôt: 08.09.1995
(51) Int. Cl.: F25D 16/00, A47J 39/00, F28F 13/00

(54) **CHARIOT MOBILE DISTRIBUTEUR DE PLATEAUX-REPAS CHAUDS ET FROIDS A REMISE EN TEMPERATURE ET REFRIGERATION A RESERVE AUTONOME DE FRIGORIES ET ...**
BEWEGBARER KARREN FÜR WARME UND KALTE FERTIGGERICHT-TABLETTS MIT MITTELN ZUR ERWÄRMUNG UND KÜHLUNG
MOBILE TROLLEY FOR DISTRIBUTING HOT AND COLD MEAL TRAYS HAVING WARMING-UP AND REFRIGERATION CAPACITIES WITH SELF-CONTAINED RESERVE AND ...

(43) Date de publication de la demande: 24.06.1998
(73) Titulaire: Grandi, René, I-22060 Campione d'Italia (IT)
(72) Inventeur: Grandi, René, I-22060 Campione d'Italia (IT)
(74) Mandataire: Roman, Michel
(86) Numéro de dépôt international: FR9501157
(87) Numéro de publication internationale: WO9709575

(56) Documents cités:
- FR-A- 2 652 885
- FR-A- 2 684 281
- FR-A- 2 689 222

## Description

La présente invention a pour objet un chariot mobile distributeur de plateaux-repas chauds et froids à remise en température et réfrigération à réserve autonome de frigories et régénération des frigories.

Il est destiné à la distribution de plateaux-repas comportant une partie avec mets chauds et une partie avec mets froids, et devant être maintenus à basse température en attendant que la partie du plateau adéquate soit remise en température pour la consommation des mets chauds.

On connaît des chariots distributeurs de repas comportant un compresseur embarqué pour leur maintien en froid. Mais ces moyens nécessitent un certain équipement: compresseurs, évaporateurs, condensateurs etc..., ces éléments présentant une grande fragilité dans le contexte où ils sont utilisés et représentent une surcharge de poids et un encombrement difficile à véhiculer en plus de la masse chargée indispensable du chariot.

Par ailleurs, ce mode de réfrigération ne permet pas le déplacement et le transport entre le lieu de fabrication et de conditionnement jusqu'au lieu de distribution et de consommation des repas, lieux qui sont très souvent éloignés et qui nécessitent un transfert par camions, lesquels ne sont pas toujours réfrigérés. Ainsi pour palier à ces inconvénients de transport, certains utilisent la neige carbonique, produit onéreux et volatil risquant en outre de provoquer le gel des aliments.

Le brevet N° FR-A 2 684 281 décrit un système de stockage et de distribution de plateaux-repas avec mets chauds et froids utilisant un chariot accouplable à une unité fixe de réfrigération et de chauffage, ledit chariot recevant les plateaux-repas et comportant zone pour les mets chauds et une zone pour les mets froids, l'unité fixe étant équipée d'une section de réfrigération, et d'une section de réfrigération et de chauffage.

Ce système ne permet pas l'intégration des moyens de chauffage et de réfrigération dans le chariot.

Le dispositif selon l'invention évite ces inconvénients et est tout à fait indiqué pour aller dans le sens des préoccupations actuelles concernant les gaz fréon qui endommagent la couche d'ozone. Il ne sera plus permis à l'avenir de stocker du gaz réfrigérant ou CFC dans des locaux fermés tels que cuisines ou offices de distribution, et il est indispensable d'avoir actuellement des moyens différents pour produire des frigories.

Bien que les moyens de mise en oeuvre de l'objet de l'invention utilisent également une génératrice de froid, ils seront moins conséquents pour l'environnement car ils pourront être situés et installés à l'air libre ou dans des lieux inoccupés. En outre, une seule installation pourra alimenter en froid un nombre important de chariots à la fois.

Le dispositif objet de l'invention permet également une autonomie du chariot tout en conservant les propriétés recherchées, c'est-à-dire que le chariot peut être véhiculé d'un lieu à un autre et rester en attente pendant plusieurs heures avant la remise en température, tout en préservant les frigories qu'il contient.

Il se présente sous la forme d'un chariot mixte de distribution de plateaux-repas dont certains aliments, situés sur la partie de remise en température du plateau ont été cuits puis refroidis et stockés pour être distribués ultérieurement après une opération de remise en température.

Le chariot est constitué par une enceinte isotherme contenant les plateaux-repas et séparée en deux zones par une paroi également isotherme pourvue d'autant de fentes horizontales que le chariot peut contenir de plateaux et dans lesquelles ils sont insérés, obturant et isolant ainsi totalement les deux zones, l'une froide et l'autre chaude ou mixte.

Ces fentes comportent des joints rotatifs pour obturer le vide laissé par les plateaux lorsqu'ils sont retirés, afin d'éviter que la chaleur de la zone chaude ne pénètre dans la zone froide.

Cette paroi définit sur les plateaux la partie avec des mets restant froids et la partie contenant les mets à remettre en température.

La zone mixte contient des éléments de réchauffage ainsi que de réfrigération. Les deux zones sont maintenues en froid pendant les périodes d'attente jusqu'au moment prédéfini où la zone mixte prend sa fonction de remise en température, avant la distribution du repas. Les plateaux sont accessibles par deux portes opposées de part et d'autre du chariot.

La réfrigération est constituée par une double réserve de stockage de frigories. La première qui comporte un liquide ayant une grande puissance frigorifique allant jusqu'à -50°, sert à refroidir la seconde réserve ayant un liquide frigorigène de circulation. La très basse température du premier liquide est nécessaire pour le maintien dans le temps d'une réserve de frigories suffisante, mais une telle température gèlerait les produits contenus dans les plateaux d'où la nécessité de la seconde réserve de liquide dont la température sera régulée et qui viendra puiser les frigories nécessaires dans la première réserve en fonction de la température de l'enceinte.

La réfrigération et la régulation de cette deuxième réserve s'effectueront au moyen d'un ou de plusieurs cylindres rotatifs comportant des secteurs thermiquement isolants et conducteurs qui permettent d'empêcher ou d'autoriser le passage des frigories suivant la position desdits cylindres.

La composition des liquides est différente mais ceux-ci seront impérativement non nocifs et de type alimentaire.

Le liquide de la première réserve est soit préalablement réfrigéré hors de la réserve par un générateur de froid puis injecté dans ladite réserve et ainsi constamment renouvelé, soit réfrigéré par un réseau de serpentins connectés à une centrale de froid qui régénère directement la réserve.

Cette dernière étape étant importante, car au moment de la remise en température sur les lieux de consommation, la cohabitation du chaud et du froid impose une demande importante de frigories. On peut ainsi connecter directement le chariot sur une centrale de froid pendant la remise en température sur les lieux de distribution. Une centrale unique peut être utilisée pour un grand nombre de chariots.

Le liquide de la deuxième réserve effectue une circulation en circuit fermé autour de l'enceinte, grâce à un ensemble de gaines à ailettes disposant d'électrovannes avec pompes et clapets anti-retour pour faire circuler les frigories dans l'ensemble de l'enceinte et pour les évacuer autour de l'enceinte mixte, au moment de la remise en température, jusqu'à une réserve de stockage.

Des turbines ventilent les frigories sur les plateaux-repas par un système de circulation d'air sur les ailettes des gaines contenant le liquide frigorifique, puis l'air est aspiré par le centre supérieur du chariot, et refoulé de manière à passer à nouveau sur les ailettes des gaines pour se charger de frigories, et ainsi de suite.

Dans la partie mixte, les turbines ventilent indifféremment et successivement de l'air froid ou de l'air chaud, selon la demande.

Le fonctionnement de tous ces moyens est motorisé et alimenté électriquement sur les lieux de préparation et les lieux de remise en température du chariot, mais pendant la période de transport ou de déconnexion, une batterie rechargeable permet de prendre le relais.

Différentes variantes pour la réfrigération des réserves à liquide frigorigène peuvent être envisagées sans pour cela changer la fonction de l'objet de l'invention.

Dans ces variantes, il peut être utilisé le type de réfrigération et de remise en température tel qu'il est décrit dans le brevet N° FR 2691237 ou dans le brevet N° FR 2689222, où le chariot vient se connecter à un dispositif comportant une nourrice accumulatrice de froid ainsi qu'une platine productrice de calories. Ainsi connecté, ce dispositif communique à l'une des réserves de fluide frigorigène, de préférence la deuxième réserve ou réserve tampon, les frigories qui s'accumulent pendant le temps d'attente. De même, la platine permet le réchauffage de la zone de remise en température qui dispose, soit de résistances, soit d'un circuit d'huile thermique pouvant monter jusqu'à 300 °C. Ce circuit doublant celui emprunté par les frigories autour de la zone chaude du chariot, et ayant la même forme que lui. L'huile thermique est chauffée par une seule centrale de résistances puis propulsée par un circulateur, à chaque plateau ou collectivement. Après l'envoi d'air frais, les turbines prennent le relais pour pulser l'air chaud.

Il est aussi possible de loger de gros caloducs disposés verticalement puisant la chaleur (platine) à leur base et transmettre les calories sur toute la hauteur de l'enceinte. Ces calories pouvant atteindre 200 °C. Cette version à caloducs évite le circulateur tout en ayant les mêmes fonctions.

Dans une autre variante, si les moyens externes ne permettent pas de régénérer et d'introduire le liquide frigorigène dans la première réserve, soit par absence de centrale de froid ou par manque d'installation adéquate, on peut toutefois envisager d'embarquer dans le chariot mobile, un petit compresseur de type ménager peu puissant et de faible poids, logé dans le chariot de manière très protégée. Ce compresseur permettant grâce à des serpentins de réfrigérer la première réserve pendant l'attente de la distribution des plateaux-repas.

Sur les dessins annexés, donnés à titre d'exemple non limitatif d'une des formes de réalisation de l'objet de l'invention:
la figure 1 représente le chariot dans son ensemble, vu en coupe transversale verticale avec ses éléments en version de réfrigération totale,
la figure 2 montre dans les mêmes conditions le chariot avec ses éléments en version de remise en température,
la figure 3 est une coupe horizontale montrant les dispositions intérieures du chariot,
la figure 4 montre le détail d'un joint rotatif de la paroi isotherme; en A il obture la fente, en B il est ouvert en présence d'un plateau,
la figure 5 est une vue partielle en perspective, à une échelle différente, de la paroi isotherme équipée de joints rotatifs,
les figures 6 et 7 sont des représentations schématiques en perspective du système de régulation d'échange de température à cylindres rotatifs montrant respectivement ces derniers en position conductrice et isolante,
les figures 8, 9 et 10, montrent, respectivement en coupe verticale transversale, en coupe verticale longitudinale et en coupe horizontale, une variante dans laquelle le chariot est détachable du module contenant les moyens réfrigérants et de remise en température,
la figure 11 est une coupe verticale d'un chariot équipé d'un petit compresseur intégré,
et les figures 12, 13 et 14 montrent le chariot avec différents systèmes pour l'introduction des moyens réfrigérants.

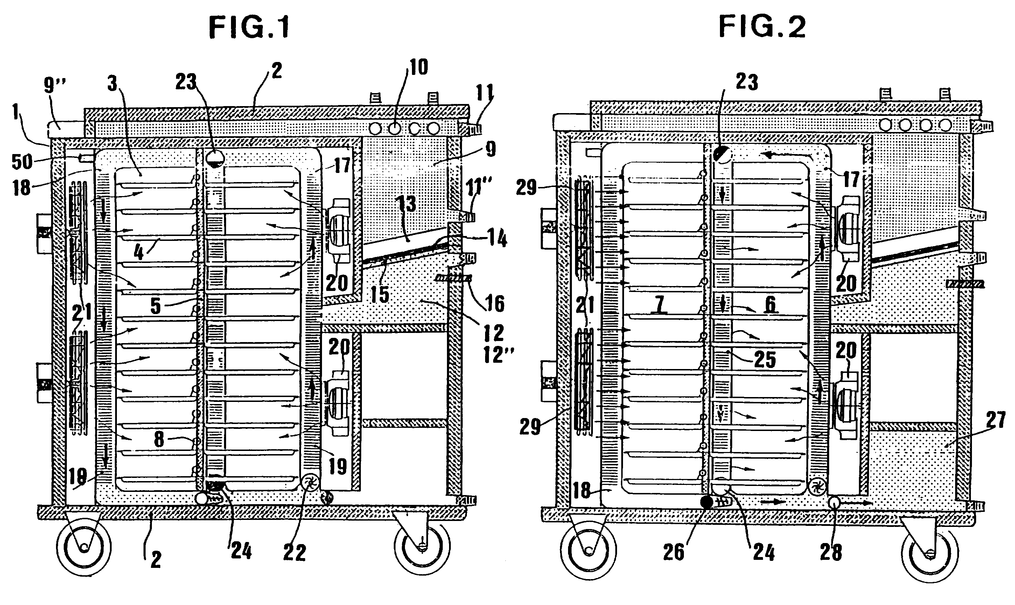

Le dispositif (figure 1) est constitué par l'ensemble du chariot 1 pourvu d'un calorifugeage 2 poussé et comportant une enceinte 3 recevant les plateaux-repas 4, divisée par une paroi isotherme 5 en deux zones, la zone 6 en réfrigération permanente et la zone mixte 7 de remise en température après un maintien en réfrigération. La paroi 5 comporte pour chaque plateau une fente avec un joint rotatif 8 obturant l'espace resté libre lorsque le plateau est retiré.

Une première réserve 9 de liquide super réfrigérant, disposée en partie haute du chariot 1, comporte des serpentins 10 pour refroidir par des moyens externes le liquide contenu, qui est introduit et évacué par des raccords rapides 11 et 11''. Un vase d'expansion 9'' permet l'évacuation de l'air lors de l'introduction.

Les frigories de cette réserve sont dissipées dans une réserve tampon 12 par un ou plusieurs cylindres rotatifs 13 comportant des tubes caloporteurs 14 de frigories (secteurs thermiquement conducteurs), ces cylindres étant contenus dans la paroi isolante 15 séparant les deux réserves 9 et 12. La réserve tampon 12 contient un fluide frigorigène 12'' moins puissant que celui de la première réserve et dont les frigories sont amenées à une température adéquate et pré-déterminée par le thermostat 16, au moyen des cylindres 13 à tube caloporteur 14.

Le fluide frigorigène 12'' circule en circuit fermé dans des gaines 17, 18 entourant la double enceinte 3 et équipées d'ailettes 19 qui diffusent les frigories sur l'ensemble des deux zones 6 et 7, au moyen de turbines 20, 21 provoquant un flux d'air qui traverse les ailettes 19. Un circulateur 22 active la circulation du fluide frigorigène 12''. Des électrovannes 23 et 24 ferment ou ouvrent une gaine centrale 25, normalement fermée, qui sera ouverte pour renforcer la réfrigération de la zone 6 lors de la remise en température. Une purge automatique 50 permet une bonne circulation du fluide frigorigène 12''.

Sur la figure 2, la zone 6 reste toujours en réfrigération tandis que la zone mixte 7 est en cours de remise en température. A cet effet, le fluide frigorigène 12'' est retiré de la gaine 18 entourant la zone chaude 7 par une pompe-électrovanne 26 jusqu'à une réserve de récupération 27. L'électrovanne 28 ouvre cette réserve 27, tandis que les électrovannes 23 et 24 ouvrent la gaine centrale 25 tout en fermant le passage du liquide frigorigène 12'' vers la gaine 18 entourant la zone chaude 7.

Dans cette configuration, les calories sont produites par des résistances 29, et propulsées dans la zone chaude 7 par les ventilateurs 21 (ces derniers brassent également l'air froid au moment de la réfrigération totale de l'enceinte). Autour de la zone 6, la réfrigération continue par les gaines 17 et 25 ainsi que par les turbines 20.

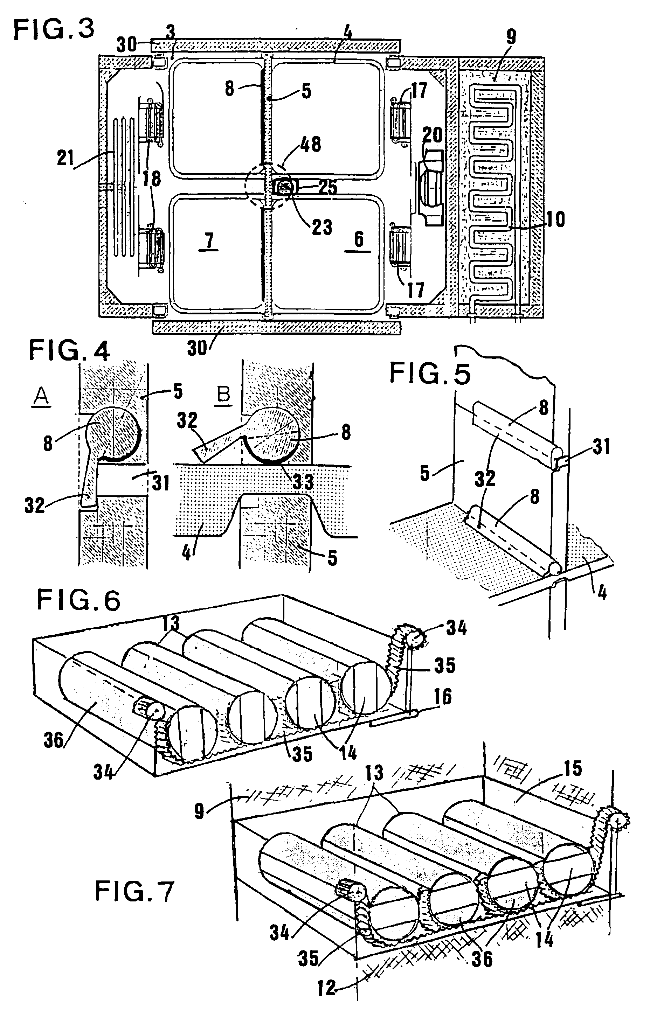

On voit sur la figure 3, l'enceinte 3 contenant une double pile de plateaux-repas 4 introduits par des ouvertures 30, les deux zones 6 et 7 sont séparées par la paroi 5 à joints rotatifs 8. La première réserve 9 contient le serpentin 10. Les turbines de ventilation 20 et 21 propulsent les frigories des gaines 17 et 18, qui sont aspirées au centre supérieur du chariot par une turbine d'aspiration 48 qui les refoule pour passer à nouveau au travers des ailettes 19 en se chargeant des frigories et ainsi de suite.

Dans la zone mixte 7, les turbines 21 soufflent indifféremment et successivement de l'air froid ou de l'air chaud, selon la demande.

Sur la figure 4, on peut voir en A la paroi isotherme 5 avec un joint rotatif 8 obturant la fente 31 grâce à un ergot longitudinal 32 en l'absence de plateau-repas, et en B, le joint rotatif ouvert par la présence d'un plateau 4. L'introduction du plateau, produit une pression sur la base 33 du joint en faisant relever l'ergot 32. Sur la perspective de la figure 5, on voit le joint 8 occupant toute la longueur de la fente 31 à obturer par l'ergot 32, sur la partie latérale de la paroi 5. En présence du plateau 4 l'ergot 32 est relevé.

Sur les figures 6 et 7, la régulation des frigories entre la première réserve 9 contenant du liquide super réfrigérant et la réserve tampon 12, est effectuée par un ou plusieurs cylindres rotatifs 13 comportant chacun un tube caloporteur 14 et installés dans la paroi isolante 15 ou dans une cassette appropriée.

L'ouverture (figure 6) ou la fermeture (figure 7) de la conduction thermique des tubes 14, donc des frigories, s'effectue par une rotation commandée par un système d'entraînement 34 agissant sur une chaîne 35, lequel système est commandé par un thermostat 16. Cette rotation détermine l'ouverture (figure 6) et la fermeture (figure 7) des cylindres rotatifs 13; ce dernier comporte également des secteurs thermiquement isolant 36 pour le tube caloporteur 14.

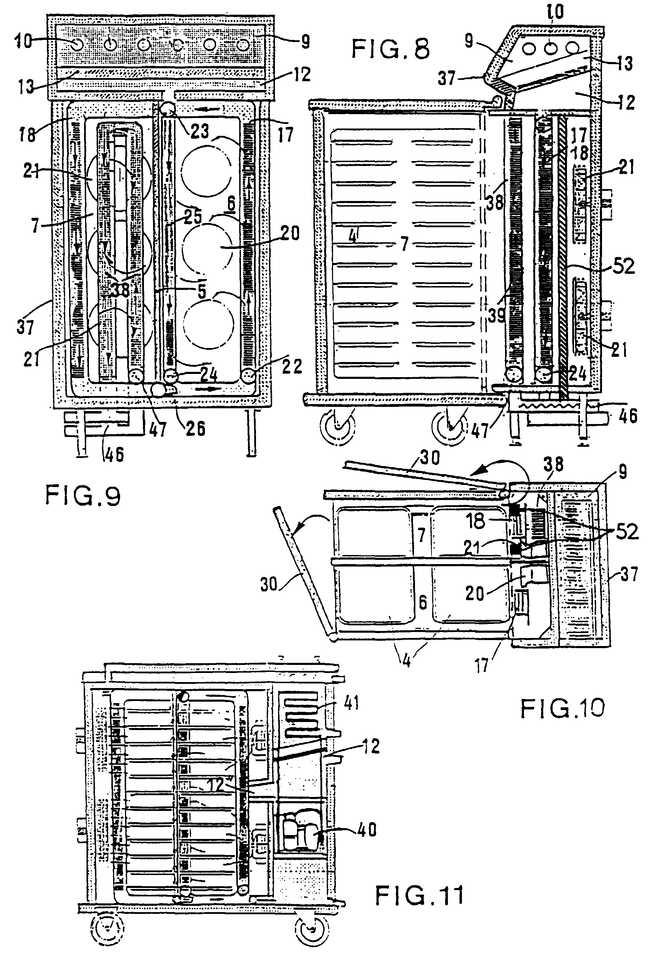

Selon une variante d'exécution (figures 8, 9 et 10) le dispositif peut être séparé en deux modules: le chariot 1 contenant les plateaux-repas 4 et un module 37 comportant tous les éléments frigorifiques: réserve 9, serpentins 10, cylindres rotatifs 13, réserve tampon 12, gaines 17, 18, gaine calorique 38 et caloducs 52. Ce module est fixe, alors que le chariot 1 est mobile et se connecte au module 37 pour être réfrigéré et mis en température. Pour effectuer cette connexion et pour obtenir les résultats décrits ci-dessus, les dispositions intérieures du chariot: les plateaux 4, la paroi isotherme 5 ainsi que les ouvertures 30 sont positionnées différemment, sans pour cela changer ou gêner l'efficacité des moyens contenus dans le module 37 qui comporte les gaines de réfrigération 17. Dans cette version, la remise en température peut s'effectuer par la circulation d'air ou d'un circuit d'huile thermique dans une gaine 38 également dotée d'ailettes 39, ou de caloducs 52, les turbines de ventilation 21 soufflent les calories sur la zone 7 des plateaux à réchauffer au moment de leur remise en température. Le circuit thermique de la gaine 38 vient doubler celui emprunté par les frigories dans les gaines 18 et 25 autour de la zone chaude 7 du chariot. L'huile thermique, qui peut monter jusqu'à 300 °C est chauffée par une seule centrale de résistances 46 puis propulsée par un circulateur 47 dans la gaine 38 à chaque plateau-repas 4 ou collectivement. Les turbines 21 ayant propulsé les frigories pendant l'attente en réfrigération soufflent alors de l'air chaud pendant que les turbines 20 continuent de ventiler la zone 6 permanente de réfrigération. Les caloducs 52 sont également chauffés par une centrale 46 ou platine 45.

Tous les éléments comme les électrovannes 23, 24, le circulateur 22, la pompe électrovanne 26 et à l'arrière la réserve de récupération 27 avec son électrovanne 28 ont les mêmes fonctions et sont employées comme précédemment.

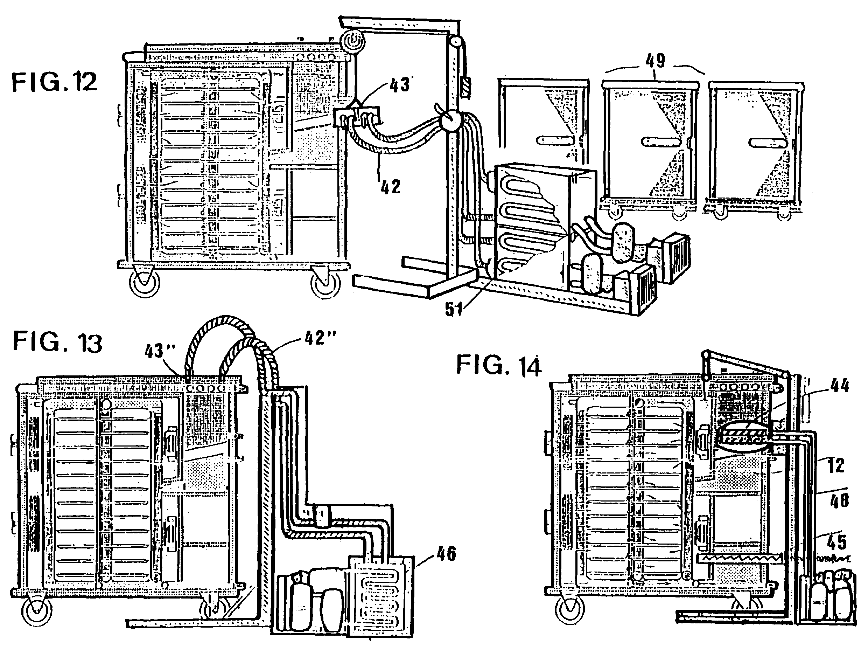

Selon une autre variante d'exécution (figure 11), le chariot 1 est équipé d'un compresseur 40 de type ménager avec des serpentins 41 permettant d'abaisser la température du liquide réfrigérant de la réserve 9 pendant l'attente de la distribution des plateaux-repas.

Les figures 12 et 13 représentent un chariot connecté à une "centrale de froid" 51 pour être chargé en liquide frigorigène par un système de tuyauteries 42, 42'' et de raccords rapides 43, 43'' selon le brevet N° FR 2691237.

Sur la figure 12 on aperçoit une "lignée" de chariots 49 en attente de distribution.

De même que la figure 14 où selon le brevet N° FR 2689222, le chariot 1 vient se connecter à un dispositif 48 comportant une nourrice accumulatrice 44 de froid ainsi qu'à une platine productrice de calories 45. Ainsi connectée, la nourrice 44 communique à la réserve tampon 12, les frigories, pendant le temps d'attente. De même la platine 45 permet le réchauffage de la zone mixte 7 qui dispose, soit de résistances, soit d'un circuit d'huile thermique pouvant monter jusqu'à 300 °C et doublant celui emprunté par les frigories autour de la zone mixte 7 du chariot. L'huile thermique est chauffée par une seule centrale de résistances puis propulsée par un circulateur, à chaque plateau-repas ou collectivement. Après l'envoi d'air frais, les mêmes turbines de ventilation pulsent de l'air chaud.

Le positionnement des divers éléments constitutifs donne à l'objet de l'invention un maximum d'effets utiles qui n'avaient pas été, à ce jour, obtenus par des dispositifs similaires.

## Revendications

1. Dispositif de chariot distributeur de plateaux-repas chauds et froids à remise en température et réfrigération à réserve autonome de frigories et régénération des frigories, destiné à la distribution de plateaux-repas comportant une partie avec mets chauds et une partie avec mets froids, et pouvant être véhiculé d'un lieu à un autre et rester en attente pendant plusieurs heures en maintenant l'ensemble des aliments à basse température, avant d'assurer la remise en température des seuls mets ayant été cuits puis refroidis et devant être consommés chauds, ledit dispositif comportant une double enceinte (3) recevant les plateaux-repas (4) constituée d'une zone de réfrigération permanente (6) et d'une zone mixte (7) à remise en température pré-déterminée, séparées par une paroi isotherme (5) pourvue de fentes (31) dans lesquelles sont insérés les plateau-repas (4),
caractérisé en ce que ladite enceinte est refroidie au moyen de deux réserves (9, 12) de liquide frigorigène séparées par une paroi isolante (15) pourvue d'un ou de plusieurs cylindres rotatifs (13) comportant des secteurs thermiquement conducteurs (14) et des secteurs thermiquement isolants (36) disposés de manière à pouvoir empêcher ou autoriser le passage des frigories entre les deux réserves suivant la position desdits cylindres, la première réserve (9) contenant un liquide réfrigérant à très basse température, le liquide frigorigène (12'') de la seconde réserve ou réserve tampon (12), activé par un circulateur (22), circulant dans des gaines (17, 18, 25) à ailettes (19)) refroidissant la zone mixte (7) et la zone de réfrigération permanente (6), la zone mixte (7) contenant des éléments de réchauffage ainsi que de réfrigération, la remise en température de ladite zone mixte s'effectuant grâce à une pompe-électrovanne (26) aspirant le fluide frigorigène (12'') circulant en circuit fermé dans la gaine (18) refroidissant la zone mixte (7) et l'envoyant dans une réserve de stockage (27), tandis que des électrovannes (23, 24) assurent simultanément la fermeture de cette gaine et l'ouverture d'une gaine centrale (25), normalement fermée, pour continuer à refroidir la zone de réfrigération permanente (6).

2. Dispositif selon la revendication 1, caractérisé en ce que la régulation des frigories passant entre la première réserve (9) contenant le liquide super réfrigérant et la réserve tampon (12), est effectuée par ajustage de la conduction thermique des cylindres rotatifs (13) s'effectuant par une rotation de ces derniers provoquée par un système d'entraînement (34) commandé par un thermostat (16) et agissant par l'intermédiaire d'une chaîne (35).

3. Dispositif selon l'une quelconque des revendications précédentes, caractérisé en ce que les deux zones (6, 7) de l'enceinte (3) comportent des turbines de ventilation (20, 21) créant un flux d'air circulant sur les ailettes (19) des gaines (17, 18, 25) en se chargeant de frigories, ledit flux d'air étant ensuite aspiré par une turbine (48) située sur la partie centrale supérieure de l'enceinte (3), pour être refoulé vers les turbines de ventilation (20, 21), les turbines (21) situées dans la zone mixte (7) brassant de l'air froid ou de l'air chaud.

4. Dispositif selon l'une quelconque des revendications précédentes, caractérisé en ce que la première réserve (9) de liquide réfrigérant comporte des serpentins (10) pour refroidir par des moyens externes le contenu de ladite réserve.

5. Dispositif selon l'une quelconque des revendications 1 à 3, caractérisé en ce que la première réserve (9) de liquide réfrigérant comporte des raccords rapides (11, 11'') permettant d'introduire et d'évacuer ledit liquide réfrigérant.

6. Dispositif selon l'une quelconque des revendications précédentes, caractérisé en ce que, lors de la remise en température de la zone mixte (7), les calories sont produites par des résistances (29), et propulsées dans par les turbines de ventilation (21) utilisées également pour la propulsion des frigories dans ladite zone mixte.

7. Dispositif selon l'une quelconque des revendications 1 à 5, caractérisé en ce que la remise en température de la zone mixte (7) s'effectue par circulation d'huile thermique dans une gaine (38) pourvue d'ailettes (39), ou par caloducs (52).

8. Dispositif selon l'une quelconque des revendications précédentes, caractérisé en ce que le chariot (1) est équipé d'un petit compresseur (40) de type ménager avec des serpentins (41) permettant d'abaisser la température du liquide réfrigérant de la première réserve (9) pendant l'attente de la distribution des plateaux-repas (4).

9. Dispositif selon l'une quelconque des revendications précédentes, caractérisé en ce que le chariot (1) est adapté pour pouvoir se connecter à un dispositif comportant une nourrice accumulatrice de froid (44) ainsi qu'à une platine (45) productrice de calories, ladite nourrice communiquant à la réserve tampon (12) les frigories nécessaires pendant le temps d'attente, la platine (45) permettant le réchauffage de la zone mixte (7).

10. Dispositif selon l'une quelconque des revendications 1 à 7, caractérisé en ce qu'il est constitué de deux éléments: le chariot (1) proprement dit contenant les plateaux-repas (4) et un module fixe (37) comportant tous les éléments frigorifiques: les réserves de liquide frigorigène (9), les serpentins (10), les cylindres rotatifs (13) et les gaines (17, 18, 25) de circulation du fluide frigorigène (12''), le chariot (1) étant détachable et pouvant être connecté audit module fixe.

11. Dispositif selon l'une quelconque des revendications précédentes, caractérisé en ce que les fentes (31) de la paroi isotherme (5) sont chacune obturée en l'absence de plateau-repas (4) grâce à un joint rotatif (8) avec ergot longitudinal (32) déterminé de telle façon qu'une poussée sur sa base (33) exercée par le plateau-repas (4) provoque le relèvement de l'ergot (32) en libérant le passage pour le plateau-repas, lequel à son tour vient obturer la fente (31).

## Claims

1. Hot and cold food tray distribution carriage, with heating and cooling functions with autonomous negative calorie reserve and negative calorie regeneration system, designed to distribute food trays with one part filled with hot food and another part with cold food, and which can be transported from one place to another and remain standing for several hours while maintaining all the foodstuffs at low temperature, before increasing the temperature of just those food items which have been cooked then cooled and which have to be consumed hot, the said device comprising a double compartment (3) receiving the food trays (4) and consisting of a permanent refrigeration zone (6) and a mixed zone (7) for increasing to a predetermined temperature, separated by an isothermal wall (5) equipped with slots (31) in which are inserted the food trays (4),
characterized in that the said compartment is cooled using two cooling liquid reservoirs (9, 12) separated by an insulating wall (15) equipped with one or several rotary cylinders (13) comprising heat conducting sectors (14) and heat insulating sectors (36) arranged so as to prevent and allow the passage of negative calories between the two reservoirs according to the position of the said cylinders, the first reservoir (9) containing the cold-carrying liquid at very low temperature, the refrigerating fluid (12'') of the second reservoir or buffer reservoir (12), activated by a circulator (22), circulating in ducts (17, 18, 25) with fins (19) and cooling the mixed zone (7) and the permanently cooled zone (6), the mixed zone (7) containing the heating and cooling elements, the heating of the said mixed zone taking place through a solenoid valve-pump unit (26) drawing in the refrigerating fluid (12'') circulating in a closed circuit in the duct (18) cooling the mixed zone (7) and dispatching it to the storage reservoir (27), whereas the solenoid valves (23, 24) simultaneously ensure closure of this duct and opening of a central duct (25), which is normally closed, in order to continue cooling the permanently cooled zone (6).

2. Device according to claim 1, characterized in that the negative calorie control passes between the first reservoir (9) containing the super-cooled liquid and the buffer reservoir (12), takes place by adjusting the thermal conduction of the rotating cylinders (13), themselves taking place by rotation of the latter caused by a drive system (34) controlled by a thermostat (16) and acting through a chain (35).

3. Device according to any one of the aforesaid claims characterized in that the two zones (6, 7) of the compartment (3) include ventilation fans (20, 21) creating a circular air flow on the fins (19) of the ducts (17, 18, 25) and picking up the negative calories, the said air flux being then sucked in by a fan (48) situated on the upper central part of the compartment (3) in order to be dispatched to the ventilation turbines (20, 21), the turbines (21) situated in the mixed zone (7) mixing the cold air and the hot air.

4. Device according to any one of the aforesaid claims, characterized in that the first reservoir (9) of cold-carrying liquid includes coils (10) for cooling the contents of the said tank by external means.

5. Device according to any one of claims 1 to 3 characterized in that the first reservoir (9) of cooling liquid includes quick connectors (11, 11'') allowing the introduction and evacuation of the said cooling liquid.

6. Device according to any one of the aforesaid claims characterized in that, on increasing the temperature in the mixed zone (7), the heat is produced by heating resistances (29), and the air propelled by ventilation fans (21), also used to propel the negative calories into the said mixed zone.

7. Device according to any one of claims 1 to 5, characterized in that the heating of the mixed zone (7) takes place by circulation of thermal oil in a duct (38) equipped with fins (39) or by heat pipes (52).

8. Device according to any one of the aforesaid claims, characterized in that the carriage (1) is equipped with a small compressor (40) of domestic type with coils (41) allowing the temperature of the cooling liquid of the first reservoir (9) to be lowered while waiting for food tray distribution (4).

9. Device according to any one of the aforesaid claims characterized in that the carriage (1) is adapted to be connected to a device with a cold accumulation feed tank (44) together with a calorie producing plate (45), the said feed tank communicating the negative calories to the buffer reservoir (12) which are needed during the waiting period, the plate (45) heating the mixed zone (7).

10. Device according to any one of claims 1 to 7, characterized in that it consists of two elements: the carriage (1) itself which contains the food trays (4) and a fixed module (37) with all the negative calorie elements; the reservoirs of cold-carrying liquid (9), the coils (10), the rotary cylinders (13) and the ducts (17, 18, 25) for cold-carrying fluid circulation (12''), the carriage (1) being detachable and capable of being connected to the said fixed module.

11. Device according to any one of the aforesaid claims characterized in that the slots (31) of the isothermal wall (5) are each one plugged in the absence of food trays (4) by a rotary seal (8) with longitudinal pin (32) designed so that pressure on its base (33) by the food tray (4) causes the pin (32) to rise and free the passage for the food tray, which itself then plugs the slot (31).

## Patentansprüche

1. Anordnung eines Ausgabewagens für warme und kalte Imbißplatten mit Aufwärmung und Kühlung, mit autonomem Frigorie-Speicher und Regeneration der Figories, bestimmt zur Ausgabe von Imbißplatten, mit einem Bereich mit warmen Speisen und einem Bereich mit kalten Speisen, und der von einem Ort an einen anderen Ort verfahren und während mehreren Stunden in Bereitschaft gehalten werden kann mit Haltung der gesamten Nahrungsmittel auf niederer Temperatur bevor eine Aufwärmung von ausschließlich der gegarten und dann gekühlten und warm zu verzehrenden Speisen, wobei die besagte Anordnung ein zweiteiliges Gehäuse (3) umfaßt, das die Imbißplatten (4) aufnimmt und einen Dauer-Kühlbereich (6) und einen Wechsel-Bereich (7) mit vorbestimmter Aufwärmung, getrennt durch eine mit Spalten (31) versehene isothermische Wand (5), in welche die Imbißplatten eingeschoben werden,
dadurch gekennzeichnet, daß das besagte Gehäuse mittels zwei durch eine Isolierwand (15) getrennten Kälteflüssigkeits-Speichern (9, 12) gekühlt wird, wobei die besagten Speicher mit einem oder mehreren Drehzylindern (13) ausgestattet sind, die warmeleitende Sektoren (14) und wärmeisolierende Sektoren (36) aufweisen, welche so angeordnet sind, daß entsprechend der Position der besagten Zylinder der Transfer der Frigories zwischen den beiden Speichern gehemmt oder begünstigt werden kann, der erste Speicher (9) eine Kühlflüssigkeit mit sehr niedriger Temperatur enthält, die Kälteflüssigkeit (12'') des zweiten Speichers bzw. Pufferspeichers (12), aktiviert durch eine Umwälzpumpe (22), in Rohren (17, 18, 25) mit Rippen (19) fließt und den Wechsel-Bereich (7) und den Dauer-Kühlbereich (6) kühlt, der Wechsel-Bereich (7) Wärmelemente sowie Kühlelemente enthält, die Aufwärmung des besagten Wechsel-Bereichs mit Hilfe einer Magnetventil-Pumpe (26) erfolgt, welche die in geschlossenem Kreis in dem Rohr (18) fließende Kälteflüssigkeit (12'') ansaugt und damit den Wechsel-Bereich (7) kühlt und sie in den Lagerspeicher (27) pumpt, während die Magnetventile (23, 24) gleichzeitig das Schließen dieses Rohres und das Öffnen eines normalerweise geschlossenen Zentralrohres (25) gewährleisten, um den Dauer-Kühlbereich (6) weiter zu kühlen.

2. Anordnung gemäß Anspruch 1, dadurch gekennzeichnet, daß die Regulierung der Frigories, die zwischen dem die superkühlende Flüssigkeit enthaltenden ersten Speicher (9) und dem Pufferspeicher (12) fließen, durch Einstellung der Wärmeleitung der Drehzylinder (13) erfolgt, wobei diese Einstellung durch ein Drehen dieser letzteren mittels eines durch ein Thermostat (16) gesteuertes und über eine Kette (35) wirkendes Antriebssystems (34) erfolgt.

3. Anordnung gemäß irgendeinem der vorhergehenden Ansprüche, dadurch gekennzeichnet, daß die beiden Bereiche (6, 7) des Gehäuses (3) Ventilatorturbinen (20, 21) umfassen, die einen um die Rippen (19) der Rohre (17, 18, 25) fließenden Luftstrom erzeugen, welcher mit Frigories aufgeladen wird, dieser Luftstrom dann von einer im oberen Mittelteil des Gehäuses (3) angeordneten Turbine (48) angesaugt und in Richtung der Ventilatorturbinen (20, 21) geblasen wird, und die in dem Wechsel-Bereich (7) angeordneten Turbinen (21) kalte Luft oder warme Luft umwälzen.

4. Anordnung gemäß irgendeinem der vorhergehenden Ansprüche, dadurch gekennzeichnet, daß der erste Kühlflussigkeits-Speicher (9) mit Rohrschlangen (10) versehen ist, um den Inhalt des besagten Speichers mit externen Mitteln zu kühlen.

5. Anordnung gemäß irgendeinem der Ansprüche 1 bis 3, dadurch gekennzeichnet, daß der erste Kühlflüssigkeits-Speicher (9) mit Schnellkupplungen (11, 11'') versehen ist, die den Einfluß und den Ausfluß der besagten Kühlflüssigkeit ermöglichen.

6. Anordnung gemäß irgendeinem der vorhergehenden Ansprüche, dadurch gekennzeichnet, daß beim Aufwärmen des Wechsel-Bereichs (7) die Kalorien von Heizwiderständen (29) erzeugt und von den ebenfalls für die Förderung der Frigories in den besagten Wechsel-Bereich benutzten Ventilatorturbinen (21) gefördert werden.

7. Anordnung gemäß irgendeinem der Ansprüche 1 bis 5, dadurch gekennzeichnet, daß das Aufwärmen des Wechsel-Bereichs (7) durch den Umlauf von Thermalöt in einem mit Rippen (39) versehenen Rohr (38) oder durch Kalodukte (52) erfolgt.

8. Anordnung gemäß irgendeinem der vorhergehenden Ansprüche, dadurch gekennzeichnet, daß der Wagen (1) mit einem kleinen Kompressor (40) des Typs für Küchenmaschinen und mit Rohrschlangen (41) ausgerüstet ist, die erlauben, die Temperatur der Kühlflüssigkeit des ersten Speichers (9) während der Zeit der Bereitschaft zur Ausgabe der Imbißplatten (4) herabzusetzen.

9. Anordnung gemäß irgendeinem der vorhergehenden Ansprüche, dadurch gekennzeichnet, daß der Wagen (1) zum Anschluß einer Vorrichtung mit einem Kälteakkumulatorkasten (44) sowie einer Kalorienerzeuger-Platine (45) ausgelegt ist, wobei der besagte Kälteakkumulatorkasten die während der Bereitschaft erforderlichen Frigories an den Pufferspeicher (12) abgibt, die Platine (45) das Aufwärmen des Wechsel-Bereichs ermöglicht.

10. Anordnung gemäß irgendeinem der Ansprüche 1 bis 7, dadurch gekennzeichnet, daß sie aus den folgenden Teilen besteht: dem eigentlichen die Imbißplatten (4) enthaltenden Wagen (1) und einem feststehenden Modul (37), das alle Kühlteile umfaßt: die Kälteflüssigkeits-Speicher (9), die Rohrschlangen (10), die Drehzylinder (13) und die Rohre (17, 18, 25) für den Umlauf der Kälteflüssigkeit (12''), wobei der Wagen (1) abtrennbar ist und an das besagte feststehende Modul angeschlossen werden kann.

11. Anordnung gemäß irgendeinem der vorhergehenden Ansprüche, dadurch gekennzeichnet, daß, wenn keine Imbißplatten (4) eingeschoben sind, die Spalten (31) der isothermischen Wand (5) durch eine mit einem Längsansatz (32) versehenen Drehdichtung (8) geschlossen sind, die so ausgelegt ist daß ein Stoß der Imbißplatte (4) gegen ihre Basis (33) das Anheben des Ansatzes (32) bewirkt und den Durchgang für die Imbißplatte freigibt, die dann ihrerseits die Spalte (31) verschließt.
